# EUROPÄISCHE PATENTSCHRIFT

(11) **EP 2 102 536 B1**
(45) Veröffentlichungstag und Bekanntmachung des Hinweises auf die Patenterteilung: **15.09.2010**
(21) Anmeldenummer: 07724228.7
(22) Anmeldetag: 13.04.2007
(51) Int. Cl.: F16K 15/18, F15B 13/08

(54) **VENTILEINRICHTUNG**
VALVE DEVICE
DISPOSITIF À SOUPAPE

(43) Veröffentlichungstag der Anmeldung: 23.09.2009
(73) Patentinhaber: FESTO AG & Co. KG, 73734 Esslingen (DE)
(72) Erfinder: KUGLER, Manuel, 70178 Stuttgart (DE); KLIEM, Maik, 73760 Ostfildern (DE); PAECH, Stephan, 73732 Esslingen (DE)
(74) Vertreter: Vogler, Bernd
(86) Internationale Anmeldenummer: PCT/EP2007/003289
(87) Internationale Veröffentlichungsnummer: WO 2008/125131

(56) Entgegenhaltungen:
- EP-A- 0 815 915
- DE-A1- 2 430 329
- DE-A1- 3 635 656
- DE-A1- 4 033 050
- DE-B- 1 000 203
- DE-B- 1 047 558
- DE-C- 919 744
- DE-U1-202004 011 532
- US-A- 3 431 942
- US-B1- 6 237 632

## Beschreibung

Die Erfindung betrifft eine Ventileinrichtung mit wenigstens einem mechanisch entsperrbaren Rückschlagventil, das ein Ventilgehäuse und eine Absperreinrichtung aufweist, die einen durch eine Komponente der Ventileinrichtung betätigbaren Stößel und ein über ein Federelement mit dem Stößel verbundenes Absperrglied aufweist, das zwischen einer Offenstellung und einer einen Fluiddurchgang durch einen zugeordneten Fluidkanal absperrenden Schließstellung bewegbar ist, wobei eine Kraftübertragung zwischen Stößel und Absperrglied über das Federelement stattfindet.

Bei herkömmlichen, mechanisch entsperrbaren Rückschlagventilen, die kein zwischen Stößel und Absperrelement befindliches Federelement aufweisen, kann beim mechanischen Ver- bzw. Entriegeln das Problem auftreten, dass bei unter Fluiddruck stehendem Fluidkanal relativ viel Druckfluid entweicht, bis die Komponente, mit der auf den Stößel gedrückt wird, vollständig angesetzt ist und das Druckfluid in den zugeordneten Fluidkanal in der Komponente strömt, ohne in die Umgebung zu entweichen. Die Menge des entweichenden Druckfluids hängt hier maßgeblich von der Bauhöhe des Stößels ab. Je höher nämlich der Stößel aufragt, desto länger ist der Stellweg, bis die Komponente vollständig angesetzt ist und ein Entweichen des Druckfluids verhindert wird. Vor diesem Hintergrund ist eine Ventileinrichtung der eingangs erwähnten Art entwickelt worden, die z.B. aus US 6 237 632 B1 bekannt ist. Hierbei ist zwischen Stößel und Absperrglied eine Schrauben-Druckfeder eingesetzt, sodass eine Kraftübertragung zwischen Stößel und Absperrglied über diese Schrauben-Druckfeder stattfindet. Beim Ansetzen der Komponente wird der Stößel folglich zunächst relativ in Richtung zum Absperrglied bewegt, ohne dass sich das Absperrglied von seinem Ventilsitz abhebt. Druckfluid kann also nicht ausströmen. Das Absperrglied hebt sich erst kurz vor Erreichen der Endstellung des Stößels, also der Stellung, in der die Komponente vollständig angesetzt ist, ab. Die hierbei austretende Fluidmenge ist vernachlässigbar. Allerdings ist die Herstellung solcher Rückschlagventile, die ja häufig relativ klein dimensioniert sind, aufwendig, da die Schrauben-Druckfeder einerseits mit dem Stößel und andererseits mit dem Absperrglied verbunden werden muss. Hierzu ist ein separater Arbeitsgang bei der Herstellung notwendig.

Aufgabe der Erfindung ist es, eine Ventileinrichtung der eingangs erwähnten Art zu schaffen, die ein Rückschlagventil aufweist, das sich durch eine einfache und kompakte Bauweise auszeichnet und somit kostengünstig herstellbar ist.

Diese Aufgabe wird durch eine Ventileinrichtung mit den Merkmalen des unabhängigen Anspruchs 1 gelöst. Weiterbildungen der Erfindung sind in den Unteransprüchen dargestellt.

Die erfindungsgemäße Ventileinrichtung zeichnet sich dadurch aus, dass das Federelement aus gummielastischem Material besteht. Die Materialkosten eines derartigen Federelements aus gummielastischem Material sind gegenüber einem als Schrauben-Druckfeder ausgebildeten Federelement wesentlich geringer. Auch die Anbindung an den Stößel beziehungsweise das Absperrglied ist einfacher, da die äußere Gestalt eines Federelements aus gummielastischem Material frei wählbar ist, während die Form einer Schrauben-Druckfeder nun mal zylindrisch ist.

In besonders bevorzugter Weise ist das Federelement mit dem Stößel und dem Absperrglied stoffschlüssig verbunden. Insbesondere sind Federelement, Stößel und Absperrglied aneinander angeformt. Dies kann beispielsweise bei der Herstellung der den Stößel, das Absperrglied und das Federelement aufweisenden Absperreinrichtung in einem Arbeitsgang erfolgen.

Als gummielastisches Material für das Federelement eignet sich vorzugsweise Elastomermaterial, insbesondere Kautschuk, beispielsweise Acrylnitril-Butadien-Kautschuk (NBR). Es sind jedoch auch andere Kautschuk-Arten einsetzbar.

Zweckmäßigerweise bestehen Stößel und Absperrglied demgegenüber aus härterem Material, insbesondere bestehen Stößel und Absperrglied zumindest teilweise aus gegenüber dem Federelement anderem Kunststoffmaterial. Es eignet sich hierzu beispielsweise thermoplastisches Kunststoffmaterial. Als Kunststoffmaterial im Sinne der Anmeldung wird auch Elastomermaterial verstanden.

Besonders zweckmäßig ist es, Federelement, Stößel und Absperrglied mittels Kunststoffspritzgießen aneinander anzuspritzen. Hierzu kann beispielsweise das sogenannte ZweiKomponenten-Spritzgießen eingesetzt werden.

Alternativ ist es möglich, das Federelement mit dem Stößel und dem Absperrelement formschlüssig zu verbinden.

Besonders zweckmäßig ist es, zusätzlich zur Stoffschlussverbindung zwischen Federelement, Stößel und Absperrglied eine formschlüssige Verbindung zwischen dem Federelement und dem Stößel und/oder dem Absperrglied vorzusehen.

Bei einer Weiterbildung der Erfindung weist das Absperrglied ein Dichtelement zum Abdichten des Fluiddurchgangs in der Schließstellung und einen das Dichtelement tragenden Dichtelementträger auf. Dichtelement und Dichtelementträger können stoffschlüssig miteinander verbunden sein. Das Dichtelement kann aus gummielastischem Material und der Dichtelementträger aus gegenüber dem gummielastischen Material härteren Material bestehen. Beispielsweise ist es möglich, dass Dichtelement und Federelement aus demselben gummielastischen Material bestehen. Es ist beispielsweise möglich, bei der Herstellung der Absperreinrichtung Federelement und Dichtelement gleichzeitig auszubilden.

Es ist prinzipiell jedoch auch möglich, das Absperrglied ohne Dichtelement auszubilden, beispielsweise dann, wenn sich ein solches Dichtelement am Ventilgehäuse befindet.

Bei einer Weiterbildung der Erfindung ist ein in das Ventilgehäuse einsetzbares Führungselement vorgesehen, in dem der Stößel mittels Führungsmitteln beweglich geführt ist.

Um eine einfache Montage zu ermöglichen, kann das Führungselement als Steckbauteil in eine zugeordnete Aufnahmeöffnung des Ventilgehäuses eingesetzt werden, wobei zusätzliche Befestigungsmittel nicht notwendig sind. Beispielsweise ist es möglich, Führungselement und Aufnahmeöffnung konusartig auszubilden.

Das Führungselement kann einen Anschlag aufweisen, der mit einem am Stößel ausgebildeten Gegenanschlag derart zusammenwirkt, dass der Stößel in Axialrichtung gegen Herausfallen aus dem Führungselement gesichert ist.

In besonders bevorzugter Weise wird das Ventilgehäuse von einer Ventil-Grundplatte einer Ventilbatterie gebildet.

Ein bevorzugtes Ausführungsbeispiel der Erfindung ist in der Zeichnung dargestellt und wird im Folgenden näher erläutert. In der Zeichnung zeigen:
- Figur 1: eine perspektivische, teilweise geschnittene Dar- stellung eines bevorzugten Ausführungsbeispiels der erfindungsgemäßen Ventileinrichtung,
- Figur 2: eine vergrößerte Darstellung der Einzelheit X aus Figur 1,
- Figur 3: eine perspektivische Darstellung der Absperrein- richtung des Rückschlagventils der Ventileinrich- tung,
- Figur 4: die Absperreinrichtung von Figur 3 im eingebauten Zustand, wobei sich das Absperrglied in der Schließstellung befindet,
- Figur 5: die Absperreinrichtung von Figur 4, wobei sich das Absperrglied in der Schließstellung befindet und der Stößel unter Komprimierung des Federelements in Richtung Absperrglied bewegt wurde,
- Figur 6: die Absperreinrichtung von Figur 4 oder 5, wobei sich das Absperrglied in der Offenstellung befin- det,
- Figur 7: eine perspektivische Darstellung einer bevorzugten Ausführungsform eines Führungselements der Ventil- einrichtung,
- Figur 8: einen Schnitt durch die Ventileinrichtung bei der Montage von Absperreinrichtung und Führungselement und
- Figur 9: das Führungselement und die Absperreinrichtung von Figur 8 im eingebauten Zustand.

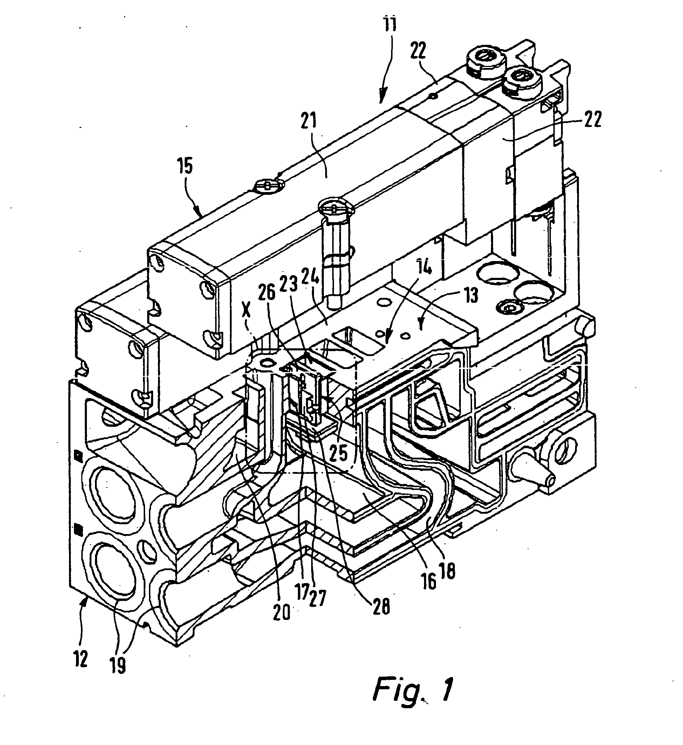

Figur 1 zeigt ein bevorzugtes Ausführungsbeispiel der erfindungsgemäßen Ventileinrichtung 11. Die Ventileinrichtung 11 ist hier beispielhaft in Form einer Ventilbatterie gezeigt, die eine Ventil-Grundplatte 12 aufweist, die eine Bestückungsfläche 13 besitzt, die in Reihenrichtung in mehrere Bestückungsplätze 14 unterteilt ist, die jeweils zur Aufnahme einer Ventileinheit 15 dienen. Die Ventil-Grundplatte 12 besitzt ferner einen Fluidanschluss (nicht dargestellt), über den Druckfluid, insbesondere Druckluft, in die Ventil-Grundplatte 12 gelangt und von dort über einen Speisekanal 16 weitertransportiert wird. Vom Speisekanal 16 zweigen mehrere Speisekanal-Abschnitte 17 in Richtung zur Bestückungsfläche 13 ab, wodurch die einzelnen Ventileinheiten 15 mit Druckluft beaufschlagbar sind. Ferner besitzt die Ventil-Grundplatte 12 noch diverse Arbeitskanäle 18, über die je nach Schaltvorgang der zugeordneten Ventileinheit 15 an zugeordneten Verbraucheranschlüssen 19 angeordnete Verbraucher mit Druckluft versorgt werden. Ferner sind noch diverse Entlüftungskanäle 20 vorgesehen.

Die Ventileinheit 15 besitzt ein Hauptventil 21, dem wenigstens ein Vorsteuerventil 22 zugeordnet ist. Gemäß dem bevorzugten Ausführungsbeispiel sind zwei Vorsteuerventile 22, insbesondere an derselben Seite des Hauptventils 21 angeordnet, vorgesehen. Auf den Aufbau und die Funktionsweise des Hauptventils 21 beziehungsweise der Vorsteuerventile 22 soll hier nicht näher eingegangen werden.

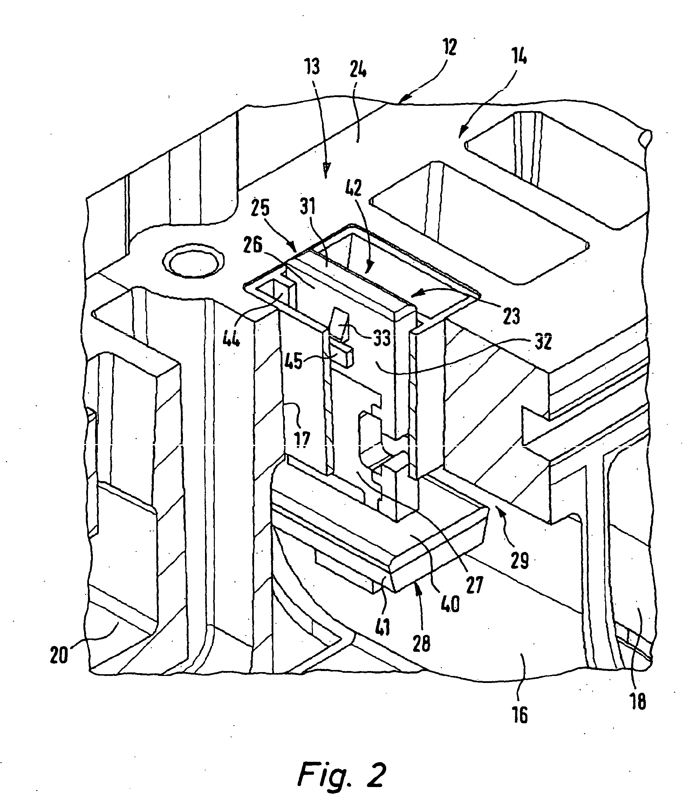

Wie insbesondere in den Figuren 1 und 2 gezeigt, befindet sich in den Speisekanal-Abschnitten 17 jeweils ein mechanisch entsperrbares Rückschlagventil 23, das den Austritt von Druckluft bei unbestücktem Bestückungsplatz 14 verhindert. Das Rückschlagventil 23 besitzt ein Ventilgehäuse 24, das gemäß dem bevorzugten Ausführungsbeispiel durch die Ventil-Grundplatte, insbesondere durch die Wandung des Speisekanal-Abschnitts 17, gebildet wird, und eine Absperreinrichtung 25, die ihrerseits einen durch die Ventileinheit 15 betätigbaren Stößel 26 und ein über ein Federelement 27 mit dem Stößel 26 verbundenes Absperrglied 28 aufweist. Das Absperrglied 28 ist zwischen einer Offenstellung 29 und einer den Fluiddurchgang durch den Speisekanal-Abschnitt 17 absperrenden Schließstellung 30 bewegbar, wobei eine Kraftübertragung zwischen Stößel 26 und Absperrglied 28 über das Federelement 27 stattfindet.

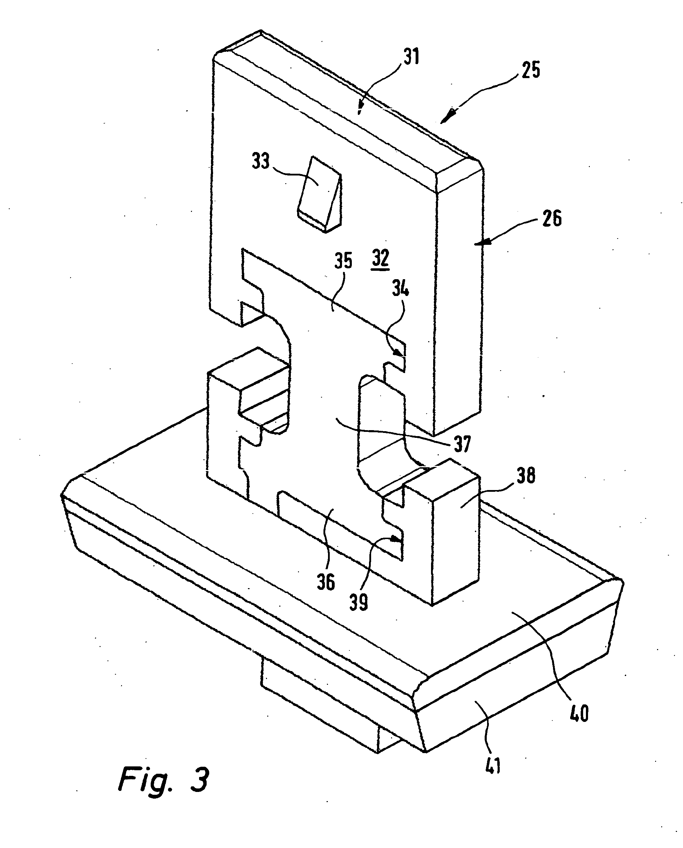

Die in Figur 3 in Alleindarstellung gezeigte Absperreinrichtung 25 besteht also im Wesentlichen aus drei Komponenten, nämlich dem Stößel 26, dem Absperrglied 28 und dem dazwischen befindlichen Federelement 27. Der Stößel 26, der hier beispielhaft quaderartig dargestellt ist, besitzt an seiner Oberseite eine Ansetzfläche 31, an die in nachfolgend noch näher beschriebener Weise die Ventileinheit 15, insbesondere deren Hauptventil 21, angesetzt wird. An einer oder an beiden einander gegenüberliegenden großflächigen Seiten 32 befindet sich jeweils eine seitlich nach außen abragende, in etwa dreieckförmige Nase 33, mit nachfolgend noch näher beschriebener Funktion. An der der Ansetzfläche 31 gegenüberliegenden Unterseite des Stößels 26 befindet sich eine Ausnehmung 34 mit insbesondere T-artiger Grundform, in der ein korrespondierend hierzu ebenfalls insbesondere T-artiger Kopfabschnitt 35 des Federelements 27 angeordnet ist. Selbstverständlich ist es möglich, eine von der T-Form abweichende Ausgestaltung zu wählen. Der Stößel 26 besteht bevorzugterweise aus thermoplastischem Kunststoffmaterial.

Stößel 26 und Federelement 27 sind im Bereich der miteinander korrespondierenden T-artigen Abschnitte stoffschlüssig miteinander verbunden. Zusätzlich hierzu ist durch den T-artigen Hinterschnitt zwischen dem Kopfabschnitt 35 des Federelements 27 und der Ausnehmung 34 ein Formschluss vorhanden.

Das Federelement 27 besteht aus gummielastischem Material, insbesondere Acrylnitril-Butadien-Kautschuk (NBR). Wie erwähnt, besitzt es einen T-artigen Kopfabschnitt 35, dem ein ebenfalls insbesondere T-artiger Fußabschnitt 36 gegenüberliegt. Zwischen Kopfabschnitt 35 und Fußabschnitt 36 ist ein schmalerer Mittelbereich 37 ausgebildet. Die Verbindung zwischen dem Federelement 27 und dem Absperrglied 28 erfolgt in ähnlicher Weise wie die Verbindung zwischen Stößel 26 und Federelement 27. Das Absperrglied 28 besitzt hierzu eine Verankerungspartie 38 mit einer insbesondere T-artigen Aufnahme 39, in der der korrespondierend hierzu ausgebildete T-artige Fußabschnitt des Federelementes 27 aufgenommen ist. Auch hier liegt eine stoffschlüssige Verbindung zwischen dem Federelement 27 und dem Absperrglied 28 vor. Zusätzlich ist durch die T-artige Hinterschneidung ein Formschluss vorgesehen. Die Verankerungspartie 38 ist an ihrer Unterseite mit einem Dichtelement aus gummielastischem Material, insbesondere demselben gummielastischen Material wie das Federelement 27, verbunden. Dieses relativ weiche Material des Dichtelements 40 gewährleistet eine hinreichende Abdichtung des Fluiddurchgangs durch den Speisekanal-Abschnitt 17 in der Schließstellung 30 des Absperrglieds 28. Dieses Dichtelement 40 wird von einem plattenartigen Dichtelementträger 41 getragen. Der Dichtelementträger 41 besteht bevorzugterweise aus thermoplastischem Kunststoff. Auch die Verankerungspartie 38 besteht bevorzugterweise aus thermoplastischem Kunststoff.

Die in Figur 3 dargestellte Absperreinrichtung 25 ist ein Kunststoffspritzgießteil, das durch zwei-Komponenten-Spritzgießen hergestellt wird. Die eine Komponente ist thermoplastischer Kunststoff, aus dem der Stößel 26, die Verankerungspartie 38 und der Dichtelementträger 41 des Absperrglieds gespritzt werden, während die andere Komponente das Elastomer- beziehungsweise Kautschukmaterial ist, aus dem das Federelement 27 und das Dichtelement 40 gespritzt werden. Die Herstellung der Absperreinrichtung 25 kann daher kostengünstig in einer Kunststoffspritzgießmaschine erfolgen, beispielsweise in einem Arbeitsgang, in dem gleichzeitig die aus thermoplastischem Kunststoff bestehenden Komponenten und die aus Elastomermaterial bestehenden Komponenten aneinander angespritzt werden. Hierzu kann beispielsweise in der Verankerungspartie ein das Federelement 27 und das Dichtelement 40 verbindender Verbindungskanal vorgesehen sein.

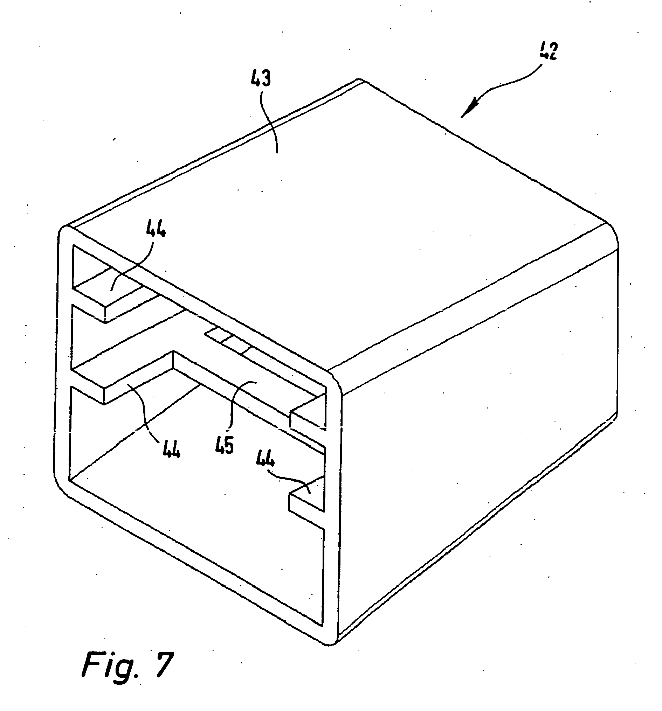

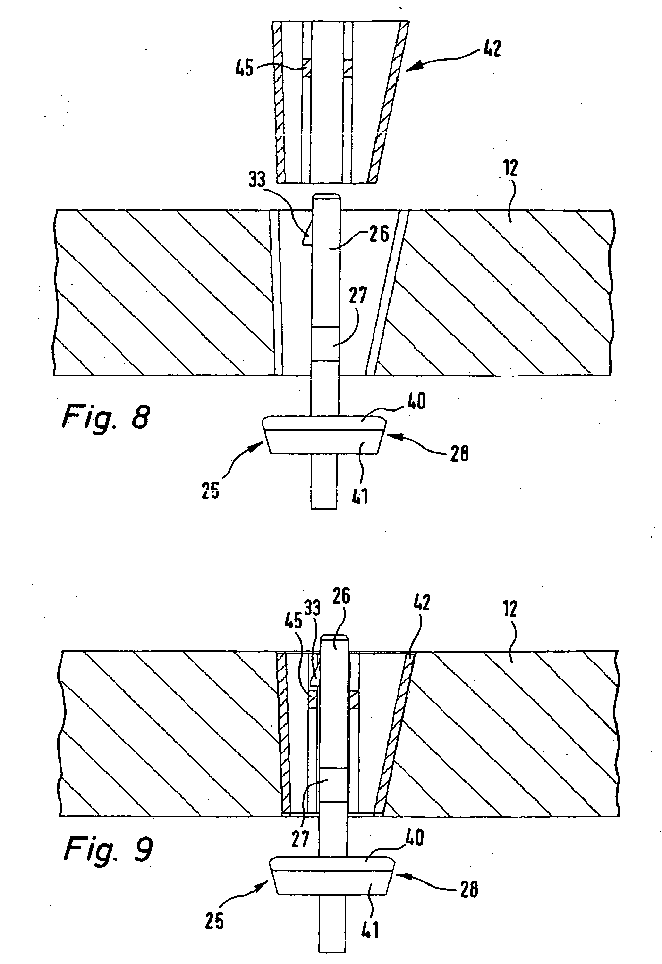

Wie insbesondere in Figur 7 dargestellt, besitzt das Rückschlagventil 23 ferner noch ein Führungselement 42, in dem der Stößel 26 mittels Führungsmitteln beweglich geführt ist. Das Führungselement 42 kann ebenfalls aus thermoplastischem Kunststoff bestehen. Es besitzt einen konusartigen Grundkörper 43, an dessen Innenseite im Wesentlichen über die gesamte Bauhöhe des Führungselements 42 verlaufende Führungsstege 44 angespritzt sind. Hierbei sind jeweils zwei Führungsstege 44 paarweise angeordnet, und zwar befindet sich an zwei gegenüberliegenden Innenseiten des Grundkörpers 43 jeweils ein Führungssteg-Paar. Die Führungsstege 44 bilden eine Führung für den Stößel 26. Zwischen zwei an gegenüberliegenden Innenseiten des Grundkörpers 43 liegenden Führungsstegen 44 ist noch ein Quersteg 45 ausgebildet, der mit der am Stößel 26 befindlichen Nase 33 zusammenwirkt. Wie insbesondere in Figur 8 dargestellt, wird beim Zusammenbau das Führungselement 42 als Steckbauteil von oben, also von der Bestückungsfläche 13 her, in den korrespondierend zum konusartigen Grundkörper 43 des Führungselements 42 ausgebildeten Speisekanal-Abschnitt 17 eingesetzt. Durch den Konus ist das Führungselement in Einführrichtung axial gesichert. Die Absperreinrichtung 25 wird von unten in den Speisekanal-Abschnitt 17 eingeführt, und zwar so weit, bis die Nase 33 am Stößel über den Quersteg 45 am Grundkörper 43 des Führungselements 42 einrastet. Dadurch ist die Absperreinrichtung 25 gegen Herausfallen aus dem Führungselement 42 gesichert.

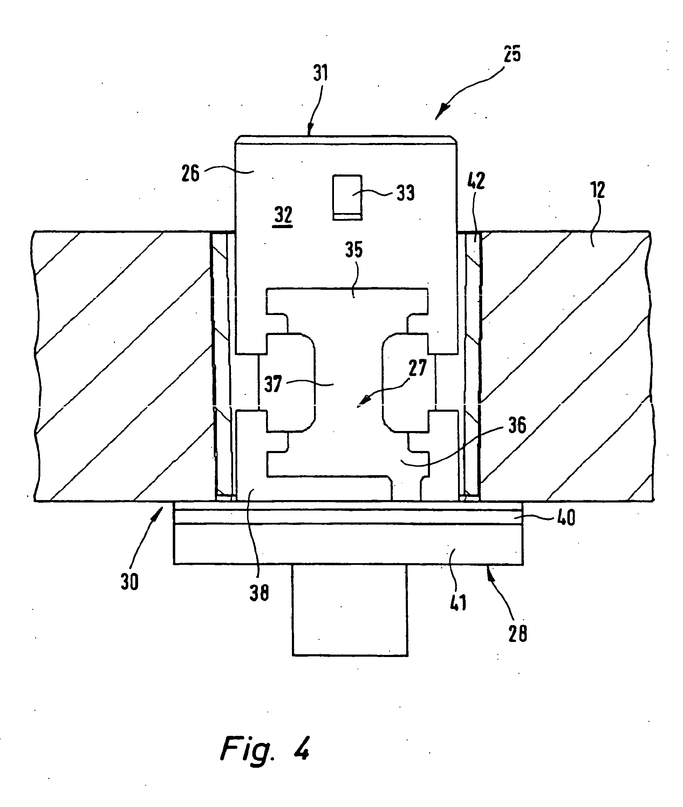

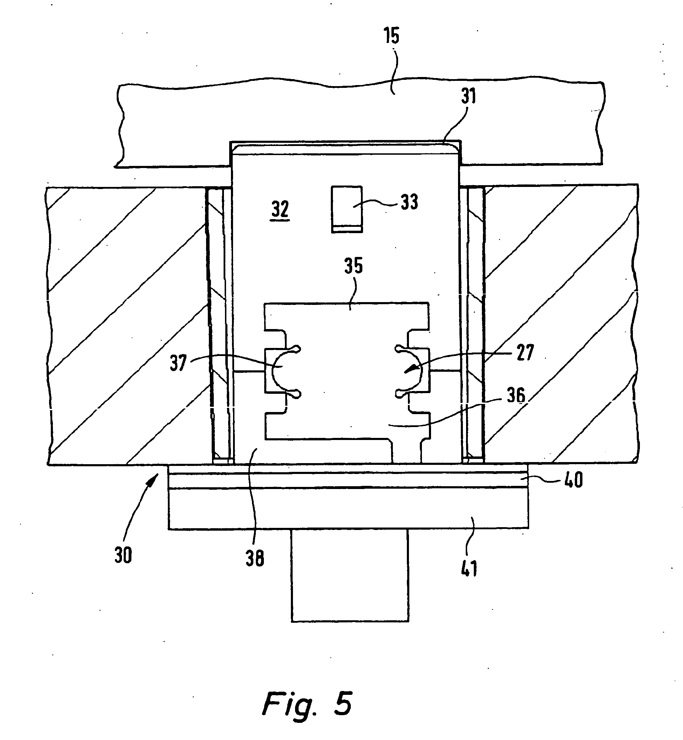

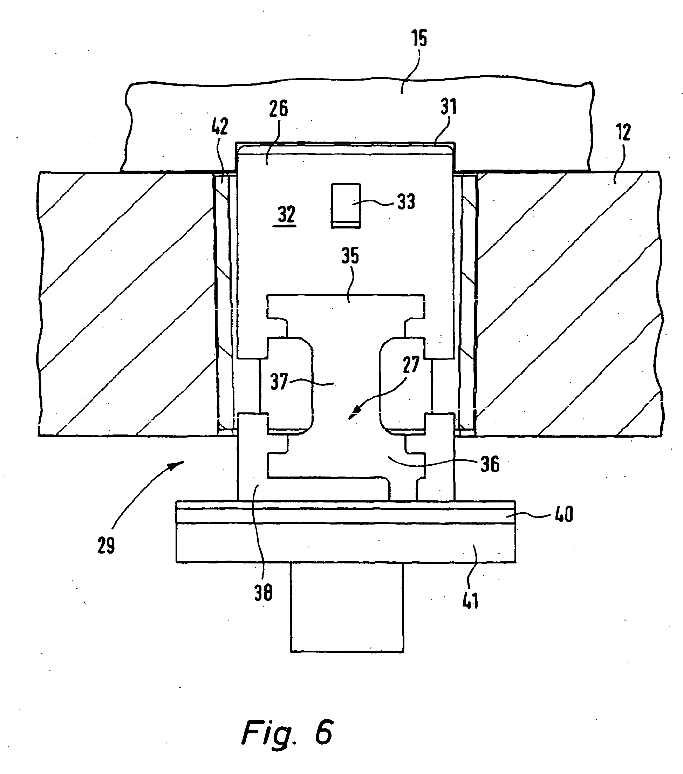

Die Funktion des Rückschlagventils 23 ist in den Figuren 4 bis 6 veranschaulicht. Wie in Figur 4 dargestellt, befindet sich das Absperrglied 28 in seiner Schließstellung 30, falls sich keine Ventileinheit 15 auf ihrem Bestückungsplatz 14 befindet. Dadurch wird verhindert, dass Druckluft in die Umgebung gelangt. Der Stößel 26 ragt deutlich über die Bestückungsfläche 13 hinaus.

Als nächstes wird nun die zugeordnete Ventileinheit 15 an die Ansetzfläche 31 des Stößels 26 angesetzt, und der Stößel wird mit der Kraft F nach unten gedrückt. Dabei wirkt die Kraft F auf das Federelement 27, das seinerseits zusammengedrückt wird, während sich das Absperrglied 28 zunächst immer noch in der Schließstellung 30 befindet, sodass keine Druckluft austreten kann. Beim Zusammendrücken des Federelements 27 wölbt sich der Mittelbereich 37 des Federelements 27 nach außen. Die damit verbundene Durchmesservergrößerung des Mittelbereichs 37 ist durch relative durchmessergroße Ausschnitte an der Unterseite des Stößels 26 bzw. an der Oberseite der Verankerungspartie 38 möglich. Das Absperrglied 28 bleibt deshalb in seiner Schließstellung 30, weil eine durch die Druckluft auf die Unterseite des Absperrglieds wirkende Gegenkraft Fₚ größer ist als die über das Federelement 27 übertragene Kraft F. Schließlich setzt die Unterseite des Stößels 26 auf die Oberseite der Verankerungspartie 38 des Absperrglied 28 auf. Dabei ist die durch das Bestücken der Ventileinheit 15 aufgebrachte Kraft F im Wesentlichen gleichgroß wie die Gegenkraft Fₚ, sodass infolge der im Federelement 27 gespeicherten Federkraft das Absperrglied 28 aufschnappt und sich schlagartig in die Offenstellung 29 bewegt. Die Ventileinheit 15 befindet sich in unmittelbarer Nähe zur Bestückungsfläche 13, sodass lediglich noch ein kurzer Hub notwendig ist, damit die Ventileinheit 15 ihre endgültige Bestückungsposition erreicht. Die dabei austretende Druckluft ist vernachlässigbar.

Falls die Ventileinheit 15 abgenommen werden soll, laufen umgekehrte Vorgänge ab. Zunächst befindet sich das Absperrglied 28 in seiner Offenstellung 29. Wird die Ventileinheit 15 abgenommen, so tritt schlagartig ein Druckabfall auf, da eine Verbindung zur Umgebung offen ist. Dies bewirkt, dass das Absperrglied 28 durch die auf dessen Unterseite wirkende von der Druckluft stammende Kraft Fₚ schlagartig nach oben gedrückt wird und in die Schließstellung 30 kommt. Auch hier ist die austretende Druckluft vernachlässigbar. Dies macht die erfindungsgemäße Ventileinrichtung mit dem derart ausgebildeten mechanisch entsperrbaren Rückschlagventil 23 insbesondere auch für die Prozessindustrie besonders geeignet, da hier in der Regel ständig Arbeitsdruck vorliegt und der Bedarf besteht, bei anliegendem Arbeitsdruck einzelne Komponenten der Ventileinrichtung trotzdem sicher, einfach und ohne Probleme austauschen zu können.

## Patentansprüche

1. Ventileinrichtung mit wenigstens einem mechanisch entsperrbaren Rückschlagventil (23), das ein Ventilgehäuse und eine Absperreinrichtung (25) aufweist, die einen durch eine Komponente der Ventileinrichtung (11) betätigbaren Stößel (26) und ein über ein Federelement (27) mit dem Stößel (26) verbundenes, relativ zum Stößel (26) bewegliches Absperrglied (28) aufweist, das zwischen einer Offenstellung (29) und einer einen Fluiddurchgang durch einen zugeordneten Fluidkanal (17) der Ventileinrichtung (11) absperrenden Schließstellung (30) bewegbar ist, wobei eine Kraftübertragung zwischen Stößel (26) und Absperrglied (28) über das Federelement (27) stattfindet, **dadurch gekennzeichnet, dass** das Federelement aus gummielastischem Material besteht.

2. Ventileinrichtung nach Anspruch 1, **dadurch gekennzeichnet, dass** das Federelement (27) mit dem Stößel (26) und dem Absperrglied (28) stoffschlüssig verbunden ist.

3. Ventileinrichtung nach Anspruch 1 oder 2, **dadurch gekennzeichnet, dass** das Federelement (27) mit dem Stößel (26) und dem Absperrglied (28) formschlüssig verbunden ist.

4. Ventileinrichtung nach einem der vorhergehenden Ansprüche, **dadurch gekennzeichnet, dass** als gummielastisches Material des Federelements (27) Elastomermaterial, vorzugsweise Kautschuk, insbesondere Acrylnitril-Butadien-Kautschuk (NBR), vorgesehen ist.

5. Ventileinrichtung nach einem der vorhergehenden Ansprüche, **dadurch gekennzeichnet, dass** Stößel (26) und Absperrglied (28) zumindest teilweise aus gegenüber dem Federelement (27) anderem Kunststoffmaterial bestehen.

6. Ventileinrichtung nach Anspruch 5, **dadurch gekennzeichnet, dass** thermoplastisches Kunststoffmaterial vorgesehen ist.

7. Ventileinrichtung nach einem der Ansprüche 2 bis 6, **dadurch gekennzeichnet, dass** Federelement (27), Stößel (26) und Absperrglied (28) aneinander angeformt sind, vorzugsweise mittels Kunststoffspritzgießen aneinander angespritzt sind.

8. Ventileinrichtung nach einem der vorhergehenden Ansprüche, **dadurch gekennzeichnet, dass** das Absperrglied (28) ein Dichtelement (40) zum Abdichten des Fluiddurchgangs in der Schließstellung (30) und einen das Dichtelement (40) tragenden Dichtelementträger (41) aufweist.

9. Ventileinrichtung nach Anspruch 8, **dadurch gekennzeichnet, dass** Dichtelement (40) und Dichtelementträger (41) stoffschlüssig miteinander verbunden sind.

10. Ventileinrichtung nach Anspruch 8 oder 9, **dadurch gekennzeichnet, dass** das Dichtelement (40) aus gummielastischem Material und der Dichtelementträger (41) aus gegenüber dem gummielastischen Material härterem Material besteht.

11. Ventileinrichtung nach Anspruch 10, **dadurch gekennzeichnet, dass** das Dichtelement (40) aus demselben gummielastischen Material wie das Federelement (27) besteht.

12. Ventileinrichtung nach einem der vorhergehenden Ansprüche, **gekennzeichnet durch** ein in das Ventilgehäuse einsetzbares Führungselement (42), in dem der Stößel (26) mittels Führungsmitteln (44) beweglich geführt ist.

13. Ventileinrichtung nach Anspruch 12, **dadurch gekennzeichnet, dass** das Führungselement (42) als Steckbauteil in eine zugeordnete Aufnahmeöffnung im Ventilgehäuse einsetzbar und dort frei von weiteren Befestigungsmitteln festlegbar ist.

14. Ventileinrichtung nach Anspruch 13, **dadurch gekennzeichnet, dass** das Führungselement und die zugeordnete Aufnahmeöffnung konusartig ausgebildet sind.

15. Ventileinrichtung nach einem der Ansprüche 12 bis 14, **dadurch gekennzeichnet, dass** das Führungselement (42) einen Anschlag (45) aufweist, der mit einem am Stößel (26) ausgebildeten Gegenanschlag (33) derart zusammenwirkt, dass der Stößel (26) in Axialrichtung gegen Herausfallen aus dem Führungselement (42) gesichert ist.

16. Ventileinrichtung nach einem der vorhergehenden Ansprüche, **dadurch gekennzeichnet, dass** das Ventilgehäuse von einer Ventil-Grundplatte (12) einer Ventilbatterie gebildet ist.

## Claims

1. Valve unit with at least one mechanically pilot-operable check valve (23), with a valve casing and a shutoff device (25) which has a plunger (26) actuable by a component of the valve unit (11) and a shutoff element (28), movable relative to the plunger (26) and connected to the plunger (26) via a spring element (27), which may be moved between an open position (29) and a closed position (30) shutting off fluid passage through an assigned fluid channel (17) of the valve unit (11), wherein a transfer of force takes place between the plunger (26) and the shutoff element (28) via the spring element (27), **characterised in that** the spring element is made of rubber-elastic material.

2. Valve unit according to claim 1, **characterised in that** the spring element (27) is connected by material bonding to the plunger (26) and the shutoff element (28).

3. Valve unit according to claim 1 or 2, **characterised in that** the spring element (27) is connected by positive locking to the plunger (26) and the shutoff element (28).

4. Valve unit according to any of the preceding claims, **characterised in that** elastomer material, preferably rubber, in particular acrylonitrile butadiene rubber (NBR), is provided as the rubber-elastic material of the spring element (27).

5. Valve unit according to any of the preceding claims, **characterised in that** the plunger (26) and shutoff element (28) are made at least in part of a different plastic material from that of the spring element (27).

6. Valve unit according to claim 5, **characterised in that** thermoplastic material is provided.

7. Valve unit according to any of claims 2 to 6, **characterised in that** the spring element (27), plunger (26) and shutoff element (28) are integrally moulded to one another, preferably by means of plastic injection moulding.

8. Valve unit according to any of the preceding claims, **characterised in that** the shutoff element (28) has a sealing element (40) to seal the fluid passage in the closed position (30), and a sealing element support (41) bearing the sealing element (40).

9. Valve unit according to claim 8, **characterised in that** the sealing element (40) and the sealing element support (41) are joined together by material bonding.

10. Valve unit according to claim 8 or 9, **characterised in that** the sealing element (40) is made of rubber-elastic material and the sealing element support (41) of a harder material than the rubber-elastic material.

11. Valve unit according to claim 10, **characterised in that** the sealing element (40) is made of the same rubber-elastic material as the spring element (27).

12. Valve unit according to any of the preceding claims, **characterised by** a guide element (42) which may be inserted into the valve casing and in which the plunger (26) is movably guided by guide means (44).

13. Valve unit according to claim 12, **characterised in that** the guide element (42) may be inserted as a plug-in module in an assigned mounting orifice in the valve casing, where it may be located freely by further securing means.

14. Valve unit according to claim 13, **characterised in that** the guide element and the assigned mounting orifice are conical in shape.

15. Valve unit according to any of claims 12 to 14, **characterised in that** the guide element (42) has a stop (45) which interacts with a counter-stop (33) formed on the plunger (26) in such a way that the plunger (26) is secured in the axial direction against falling out of the guide element (42).

16. Valve unit according to any of the preceding claims, **characterised in that** the valve casing is formed by a valve baseplate (12) of a valve bank.

## Revendications

1. Dispositif à soupape avec au moins un clapet antiretour (23) pouvant être déverrouillé mécaniquement, qui présente une cage de soupape et un dispositif de verrouillage (25) qui présente un poussoir (26) pouvant être actionné par un composant du dispositif à soupape (11) et un organe de verrouillage (28) mobile par rapport au poussoir (26), relié via un élément de ressort (27) au poussoir (26), lequel peut être déplacé entre une position ouverte (29) et une position fermée (30) verrouillant un passage fluidique par un canal fluidique (17) associé du dispositif à soupape (11), une transmission de forces ayant lieu entre le poussoir (26) et l'organe de verrouillage (28) via l'élément de ressort (27), **caractérisé en ce que** l'élément de ressort se compose de matériau en gomme élastique.

2. Dispositif à soupape selon la revendication 1, **caractérisé en ce que** l'élément de ressort (27) est relié au poussoir (26) et à l'organe de verrouillage (28) par liaison de matière.

3. Dispositif à soupape selon la revendication 1 ou 2, **caractérisé en ce que** l'élément de ressort (27) est relié au poussoir (26) et à l'organe de verrouillage (28) par complémentarité de formes.

4. Dispositif à soupape selon l'une quelconque des revendications précédentes, **caractérisé en ce que** du matériau élastomère, de préférence du caoutchouc, en particulier du caoutchouc greffé à l'acrylonitrile-butadiène (NBR) est prévu comme matériau en gomme élastique de l'élément de ressort (27).

5. Dispositif à soupape selon l'une quelconque des revendications précédentes, **caractérisé en ce que** le poussoir (26) et l'organe de verrouillage (28) se composent au moins en partie d'un autre matériau synthétique par rapport à l'élément de ressort (27).

6. Dispositif à soupape selon la revendication 5, **caractérisé en ce que** du matériau synthétique thermoplastique est prévu.

7. Dispositif à soupape selon l'une quelconque des revendications 2 à 6, **caractérisé en ce que** l'élément de ressort (27), le poussoir (26) et l'organe de verrouillage (28) sont formés les uns sur les autres, de préférence sont moulés par injection les uns sur les autres par moulage par injection de plastique.

8. Dispositif à soupape selon l'une quelconque des revendications précédentes, **caractérisé en ce que** l'organe de verrouillage (28) présente un élément étanche (40) pour rendre étanche le passage fluidique dans la position fermée (30) et un support d'élément étanche (41) portant l'élément étanche (40).

9. Dispositif à soupape selon la revendication 8, **caractérisé en ce que** l'élément étanche (40) et le support d'élément étanche (41) sont reliés l'un à l'autre par liaison de matière.

10. Dispositif à soupape selon la revendication 8 ou 9, **caractérisé en ce que** l'élément étanche (40) se compose de matériau en gomme élastique et le support d'élément étanche (41) se compose d'un matériau plus dur par rapport au matériau en gomme élastique.

11. Dispositif à soupape selon la revendication 10, **caractérisé en ce que** l'élément étanche (40) se compose du même matériau en gomme élastique que l'élément de ressort (27).

12. Dispositif à soupape selon l'une quelconque des revendications précédentes, **caractérisé par** un élément de guidage (42) pouvant être inséré dans la cage de soupape, dans lequel le poussoir (26) est guidé de manière mobile à l'aide de moyens de guidage (44).

13. Dispositif à soupape selon la revendication 12, **caractérisé en ce que** l'élément de guidage (42) peut être inséré comme composant enfichable dans une ouverture de réception associée dans la cage de soupape et y être fixé librement par d'autres moyens de fixation.

14. Dispositif à soupape selon la revendication 13, **caractérisé en ce que** l'élément de guidage et l'ouverture de réception associée sont réalisés en forme de cône.

15. Dispositif à soupape selon l'une quelconque des revendications 12 à 14, **caractérisé en ce que** l'élément de guidage (42) présente une butée (45) qui coopère avec une contre-butée (33) réalisée sur le poussoir (26) de telle sorte que le poussoir (26) soit bloqué dans le sens axial contre toute chute de l'élément de guidage (42).

16. Dispositif à soupape selon l'une quelconque des revendications précédentes, **caractérisé en ce que** la cage de soupape est formée par une plaque de base de soupape (12) d'une batterie de soupape.
